# EUROPEAN PATENT SPECIFICATION

(11) **EP 3 254 916 B1**
(45) Date of publication and mention of the grant of the patent: **13.03.2019**
(21) Application number: 17170808.4
(22) Date of filing: 12.05.2017
(51) Int. Cl.: B60R 25/24, B62H 5/02, B62K 23/02, B60R 25/021, H01H 25/06

(54) **VEHICLE MAIN SWITCH AND VEHICLE EQUIPPED WITH SAME**
FAHRZEUGHAUPTSCHALTER UND FAHRZEUG DAMIT
COMMUTATEUR PRINCIPAL DE VÉHICULE ET VÉHICULE EN ÉTANT ÉQUIPÉ

(30) Priority: 08.06.2016 JP 2016114061
(43) Date of publication of application: 13.12.2017
(73) Proprietor: Yamaha Hatsudoki Kabushiki Kaisha, Iwata-shi, Shizuoka 438-8501 (JP)
(72) Inventor: MIURA, Yuko, Iwata-shi, Shizuoka-ken,, Shizuoka 438-8501 (JP)
(74) Representative: Stöckeler, Ferdinand

(56) References cited:
- EP-A2- 0 805 077
- EP-A2- 1 820 724
- WO-A1-01/25061
- WO-A1-03/033315
- JP-U- S56 154 717
- JP-U- S60 112 038
- KR-A- 20100 111 175
- US-A1- 2005 235 712
- US-A1- 2006 238 296
- US-A1- 2009 021 344
- US-B1- 6 257 031

## Description

### TECHNICAL FIELD

The present invention relates to a vehicle main switch that performs wireless communication with a portable device carried by a user and allows the user to operate a vehicle if the portable device is determined to be a genuine one.

### BACKGROUND ART

In recent years, a system that is called a smart key system has become widespread in the field of vehicles, such as straddled vehicles. The smart key system typically includes a portable device carried by a user and a main switch that performs wireless communication with the portable device. The main switch performs wireless communication with the portable device to determine whether or not the portable device is a genuine one. Then, if the main switch determines that the portable device is a genuine one, it permits such operations as turning on/off of the main power of the vehicle.

A main switch that is provided with an operator that can be depressed and turned has been known as an example of the main switch. For example, Japanese Patent No. 4,766,553 discloses such a main switch. As illustrated in Fig. 17, the main switch disclosed in Japanese Patent No. 4,766,553 is provided with an operator 200 including a circular disk-shaped main panel 201 and an operating knob 202. The user pinches the operating knob 202 to operate the operator 200.

The operating knob 202 has a first side surface 203, and a second side surface 204 positioned opposite the first side surface 203. The first side surface 203 and the second side surface 204 are curved so that they are closer to each other from the longitudinal ends of the operating knob 202 toward the longitudinal center thereof. The user can easily pinch the operating knob 202 by, for example, putting a thumb and an index finger respectively onto the first side surface 203 and the second side surface 204. The operating knob 202 is formed into such a shape as to induce the user to perform a pinching action. Accordingly, the user is led to pinch the operating knob 202 as soon as the user visually recognizes the operating knob 202. Thus, it is easy to induce the turning operation of the operator 200.

WO01/25061 A1 discloses a drive authorisation system.

### SUMMARY OF INVENTION

### TECHNICAL PROBLEM

Generally, an item pinched by a thumb and an index finger has a tendency that it is easy to carry out a turning operation but difficult to carry out a depressing operation. In the above-described main switch, the operating knob 202 is formed into such a shape as to induce the user to carry out a pinching action. Therefore, when the user visually recognize the operator 200, the user tends to pinch the operating knob 202 immediately. Consequently, a problem is that although a turning operation of the operator 200 is easy, but a depressing operation thereof is difficult. Another problem is that, for the user who uses the operator 200 for the first time, it is easy to intuitively understand how to carry out a turning operation, but it is difficult to intuitively understand how to carry out a depressing operation. Accordingly, the problem is that, for the user who uses the operator 200 for the first time, it is difficult to intuitively understand how to operate the operator 200.

The present invention has been accomplished in view of the foregoing and other problems, and it is an object of the invention to provide a main switch with which the user is easy to carry out not only a turning operation but also a depressing operation, and that enables the user who uses it for the first time to intuitively understand how to carry out the turning operation and the depressing operation.

### SOLUTION TO PROBLEM

The present invention provides a vehicle main switch including a lock member having operating directions that are set to be axis directions and circumferential directions, each of the axial directions being a direction in which an axis of the lock member extends and each of the circumferential directions being a direction around the axis, and an operator supported on one axial end portion of the lock member, the operator being movable in the axial directions and capable of turning in the circumferential directions. The operator includes a main panel and an operating knob provided on the main panel. The operating knob includes a shaft portion disposed on the axis of the lock member and a lever portion extending from the shaft portion in a first direction that is perpendicular to the axial direction. A distal end of the lever portion along the first direction is most distant, within the operating knob, from the axis of the lock member, when viewed along the axis. Where a direction perpendicular to the axis and the first direction is defined as a second direction, a dimension of a part of the shaft portion, that includes the axis, along the second direction is greater than a dimension of the lever portion along the second direction.

In the just-described main switch, the shaft portion is formed on the operating axis (i.e., the axis of the lock member), and the width dimension of the central portion of the shaft portion is set larger than the width dimension of the lever portion. In other words, the width dimension of the shaft portion on the operating axis is formed relatively large. With this configuration, it is easy to induce the user to carry out the operation of depressing the shaft portion on the operating axis with a finger or palm. Also, it is easy even for a first-time user to intuitively understand the operation of depressing the operating knob. In addition, because the width dimension of the central portion of the shaft portion is set relatively large, the shaft portion is easy to be depressed with a finger or palm, so the depressing operation is easy to carry out. In addition, with the just-described main switch, the rider can easily catch the lever portion with a finger in a circumferential direction (i.e., the direction of rotation) around the operating axis (the axis of the lock member) when the rider carries out a turning operation of the operating knob, because the width dimension of the lever portion is made smaller than the width dimension of the central portion of the shaft portion. As a result, it is easy to induce the turning operation, and it is easy even for a first-time user to intuitively understand the turning operation of the operating knob. Moreover, because the width dimension of the lever portion is set relatively small, the user can catch and turn the distal end of the lever portion with a finger, and the turning operation of the operating knob is easy. Particularly, even a rider wearing gloves can easily carry out the turning operation because the rider can carry out the turning operation without pinching the lever portion but by merely catching the lever portion with a finger. Thus, the present preferred embodiment can provide a main switch that is easy for the user to carry out not only a turning operation but also a depressing operation and that is also easy for a user who uses it for the first time to intuitively understand how to carry out the turning operation and the depressing operation.

In another preferred embodiment of the present invention, a distal end of the lever portion is positioned radially outward relative to the main panel.

In the just-described preferred embodiment, the distal end of the lever portion is positioned radially outward relative to the main panel. This allows the user to catch the lever portion with a finger more easily and to intuitively understand that the operating knob is intended to be turned. In addition, because the axis, which is the center of rotation, is separated away from the point of effort, the turning operation can be carried out more easily.

In another preferred embodiment of the present invention, a dimension of the operating knob along the second direction through the center of the shaft portion is greater than a dimension of any other portion of the operating knob along the second direction.

The just-described preferred embodiment allows the user to carry out the operation of depressing the shaft portion with a finger or palm more easily and also to intuitively understand the operation more easily.

In another preferred embodiment of the present invention, the operating knob includes a recessed portion recessed in one of the axial directions, formed in at least an end face of the shaft portion.

The just-mentioned preferred embodiment enables the user to easily carry out the depressing operation of the operating knob by putting a finger against the recessed portion. Moreover, it is easy to induce the user to carry out the depressing operation, and it is also easy for a first-time user to intuitively understand the depressing operation.

In another preferred embodiment of the present invention, the main panel includes: an overlapping portion overlapping with the lever portion when viewed along the axis; and a non-overlapping portion disposed at a position that is point-symmetrical with the overlapping portion with respect to the axis, and not overlapping with the operating knob when viewed along the axis.

In the just-described preferred embodiment, the non-overlapping portion is easily visible because the non-overlapping portion does not overlap with the operating knob. A space that is easily visible to the rider can be ensured. Therefore, in the case of providing indicators on the main panel, this serves to increase freedom in the layout of the indicators.

According to the present invention, the main panel includes a plurality of indicators disposed around the shaft portion of the operating knob, the plurality of indicators indicating operations to be carried out on the motorcycle.

As just described, the main panel itself is provided with the indicators. Therefore, when assembling the main switch into the vehicle, the indicators do not need to be provided in a space surrounding the main panel. As a result, it is possible to reduce the space necessary for arranging the main switch in assembling the main switch into the vehicle.

In another preferred embodiment of the present invention, an indicator region of the main panel that contains the plurality of indicators and extends in a circumferential direction includes the non-overlapping portion.

The just-described preferred embodiment makes it possible to allocate the indicator region over a sufficiently large area along the circumferential direction. As a result, the intervals between the plurality of indicators can be widened, so that the indicators are allowed to be easily visible.

In another preferred embodiment of the present invention, the vehicle main switch further includes a fixed frame having a hole in which the operator is disposed. The fixed frame includes a pointer formed at a position around the hole and radially adjacent to one of the indicators.

The just-mentioned preferred embodiment allows the user to easily understand the corresponding relationship between the turn positions of the operator and the operations to be carried out. Therefore, it is easy to carry out an operation with the operator.

A vehicle according to a preferred embodiment of the present invention may include one of the foregoing main switches.

A vehicle according to another preferred embodiment of the present invention may include a seat and one of the foregoing main switches. The main switch is disposed frontward relative to the seat, and the main switch is disposed so that the lever portion of the operating knob extends from the shaft portion downward in a vehicle vertical direction, or rearward in a vehicle fore-and-aft direction.

The just-mentioned preferred embodiment allows the rider sitting on the seat to easily operate the operating knob.

A vehicle according to another preferred embodiment of the present invention may include a seat, a steering handle, and one of the foregoing main switches. The main switch is disposed frontward relative to the seat, and the main switch is disposed leftward or rightward relative to a rotation axis of the steering handle.

The just-mentioned preferred embodiment allows the rider sitting on the seat to easily operate the operating knob.

### ADVANTAGEOUS EFFECTS OF INVENTION

The present invention can provide a main switch that is easy for the user to carry out not only a turning operation but also a depressing operation and that is easy also for a user who uses it for the first time to intuitively understand how to carry out the turning operation and the depressing operation.

### BRIEF DESCRIPTION OF DRAWINGS

Fig. 1 is a side view illustrating a motorcycle according to a preferred embodiment of the present invention.
Fig. 2 is a perspective view illustrating a portion of a front section of the motorcycle, viewed from the rear.
Fig. 3 is a block diagram illustrating the configuration of a smart key system.
Fig. 4 is a view illustrating a main switch according to a preferred embodiment of the present invention, viewed along an axis of a lock member.
Fig. 5 is a perspective view of the main switch.
Fig. 6 is a side view of the main switch.
Fig. 7 is a perspective view illustrating the main switch when the operating knob is operated.
Fig. 8 is a perspective view illustrating the main switch when the operating knob is operated.
Fig. 9 is a perspective view illustrating the main switch when the operating knob is operated.
Fig. 10 is a perspective view illustrating the main switch when the operating knob is operated.
Fig. 11 is a view illustrating a main switch according to another preferred embodiment, viewed along the axis of a lock member.
Fig. 12 is a view illustrating a main switch according to another preferred embodiment, viewed along the axis of a lock member.
Fig. 13 is a view illustrating a main switch according to another preferred embodiment, viewed along the axis of a lock member.
Fig. 14 is a view illustrating a main switch according to another preferred embodiment, viewed along the axis of a lock member.
Fig. 15 is a view illustrating a main switch according to another preferred embodiment, viewed along the axis of a lock member.
Fig. 16 is a view illustrating a main switch according to another preferred embodiment, viewed along the axis of a lock member.

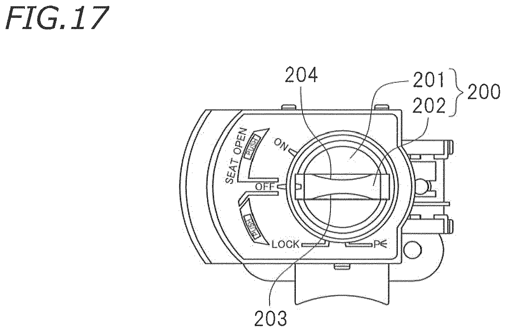

Fig. 17 is a plan view illustrating a conventional main switch.

### DESCRIPTION OF EMBODIMENTS

Hereinbelow, one preferred embodiment of the present invention will be described with reference to the drawings.

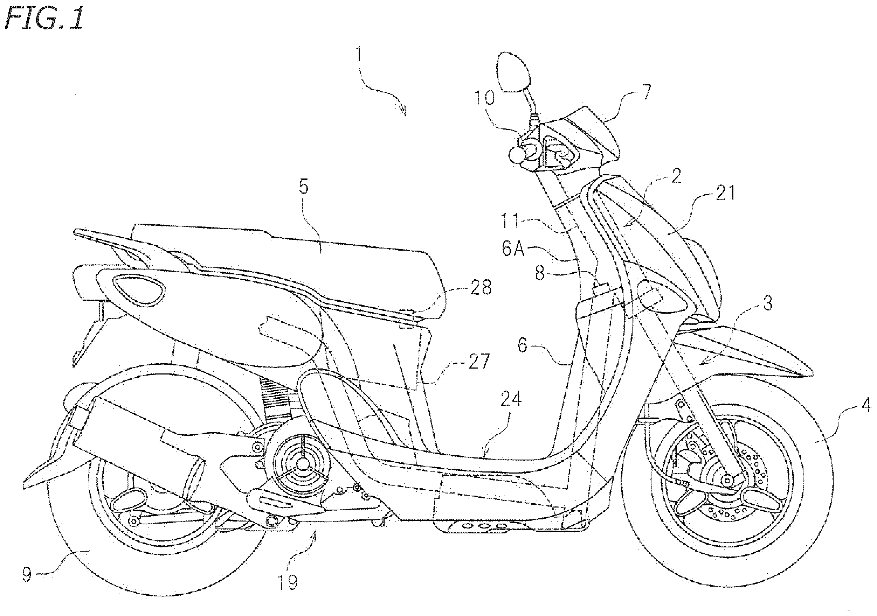

Fig. 1 is a side view of a motorcycle 1 that is provided with a main switch 8 according to the present preferred embodiment. Although the motorcycle 1 is one example of the vehicle according to the present invention, the vehicle according to the present invention is not limited to the motorcycle 1. In addition, although the motorcycle 1 according to the present preferred embodiment is illustrated as a scooter, the motorcycle 1 may be a motorcycle of a type other than the scooter.

In the following description, the terms "front," "rear," "left," "right," "up," and "down" respectively refer to front, rear, left, right, up, and down as defined based on the perspective of a virtual rider seated on a seat 5 of the motorcycle 1 standing at a standstill on a horizontal plane in an upright condition and in an unloaded condition, unless specifically indicated otherwise. The phrase "unloaded condition" means a condition in which the motorcycle 1 does not carry any rider, passenger, luggage, or fuel thereon.

The motorcycle 1 includes a body frame 2 including a head pipe 11, a seat 5 supported by the body frame 2, an engine 19 also supported by the body frame 2, a front wheel 4, and a rear wheel 9. A steering shaft, not shown, is supported by the head pipe 11 so as to be rotatable rightward and leftward. A steering handle 10 is secured to an upper portion of the steering shaft. A front wheel support member 3 is secured to a bottom portion of the steering shaft. The front wheel 4 is rotatably supported on a lower portion of the front wheel support member 3.

A storage box 27, which can accommodate items, is arranged below the seat 5. The seat 5 is configured to be pivotable about one end portion thereof. When the seat 5 is pivoted from a horizontal position to a vertical position, an upper area of the storage box 27 is opened, through which items can be put in or taken out. On the other hand, when the seat 5 is pivoted from the vertical position to the horizontal position, the upper area of the storage box 27 is closed by the seat 5. Hereinafter, the state in which the upper portion of the storage box 27 is open is referred to as a seat 5 in an open state, and the state in which the upper portion of the storage box 27 is closed is referred to as a seat 5 in a closed state. The seat 5 is provided with a seat lock mechanism 28 that can lock the seat 5 in a closed state. Any known seat lock mechanism may be used for the seat lock mechanism 28, and therefore further description thereof is deemed unnecessary. The seat 5 and the seat lock mechanism 28 are examples of "lid capable of being opened and closed" and "lid lock mechanism that can lock the lid in a closed state," respectively.

A foot board 24 is disposed between the head pipe 11 and the seat 5. The foot board 24 is disposed downward relative to the head pipe 11 and the seat 5, with respect to the vehicle vertical axis. The engine 19 is supported by the body frame 2 so as to be swingable upward and downward. The rear wheel 9 is coupled to the engine 19. The rear wheel 9 rotates by receiving a driving force from the engine 19.

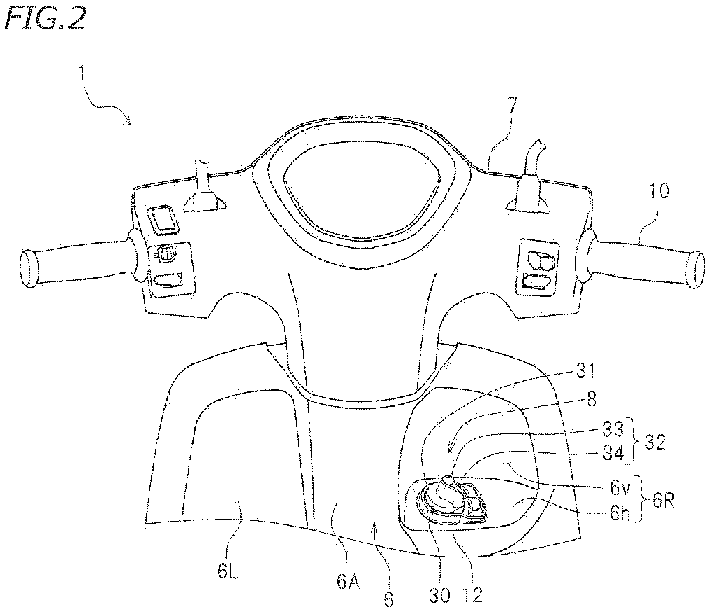

A front cover 21 is disposed in front of the head pipe 11. A handle cover 7 is disposed above the front cover 21. A leg shield 6 is disposed behind the front wheel support member 3. As illustrated in Fig. 2, the leg shield 6 includes a bulging portion 6A disposed behind the head pipe 11 and bulging rearward, a right portion 6R positioned to the right of the bulging portion 6A, and a left portion 6L positioned to the left of the bulging portion 6A.

Referring to Fig. 2, the bulging portion 6A extends in a vehicle fore-and-aft direction and in a vertical direction at substantially the same inclination angle as the head pipe 11 (see also Fig. 1). The bulging portion 6A and the head pipe 11 extend in a direction inclined with respect to a horizontal line, and the inclination angle of the bulging portion 6A with respect to the horizontal line and the inclination angle of the head pipe 11 with respect to the horizontal line are substantially the same. Referring to Fig. 2, the right portion 6R comprises a vertical wall 6v extending in a vehicle vertical direction at substantially the same inclination angle as the bulging portion 6A, and a horizontal wall 6h extending rearward and downward from the bottom end of the vertical wall 6v. The vertical wall 6v is positioned frontward relative to the bulging portion 6A. In other words, the vertical wall 6v recesses frontward with respect to the bulging portion 6A. When viewed laterally, the space above the horizontal wall 6h and behind the vertical wall 6v overlaps with the bulging portion 6A. It should be noted that the phrase "extending in a vehicle vertical direction" is meant to include the cases in which a part or component extends, not only in a vertical direction, but also in a direction inclined from the vertical direction. Likewise, the phrase "extending in a vehicle fore-and-aft direction" is meant to include the cases in which a part or component extends, not only in a horizontal direction, but also in a direction inclined from the horizontal direction.

The main switch 8 is provided in the horizontal wall 6h. The position of the main switch 8 is, however, not limited thereto. For example, it is also possible to provide the main switch 8 in the vertical wall 6v. The main switch 8 is disposed frontward relative to the seat 5. The main switch 8 is disposed rightward relative to the bulging portion 6A of the leg shield 6. When viewed laterally, the main switch 8 overlaps with the bulging portion 6A.

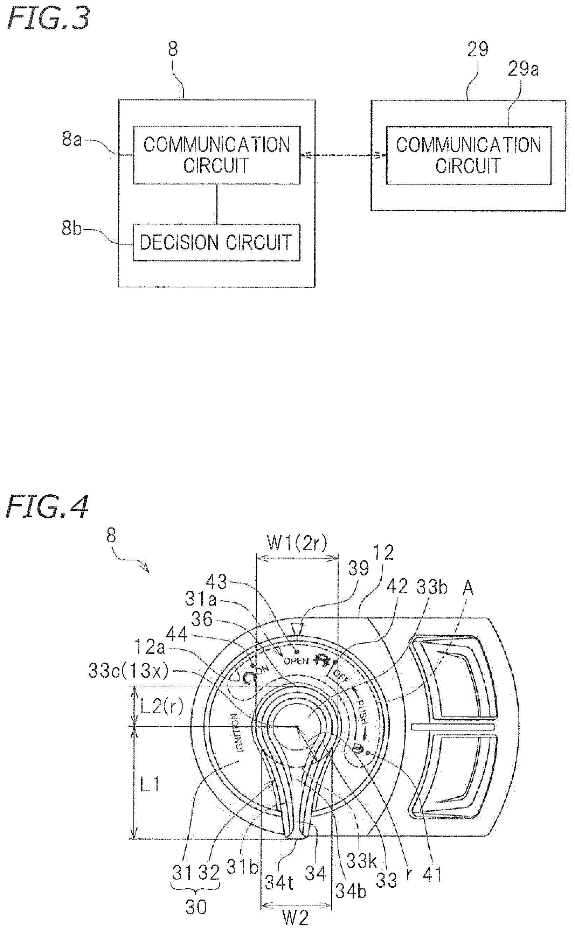

As illustrated in Fig. 3, the main switch 8 is configured to be capable of wireless communication with a portable device (hereinafter referred to as an "electronic key") 29 carried by the rider. The main switch 8 and the electronic key 29 constitute a smart key system. The electronic key 29 includes a communication circuit 29a for transmitting an ID code that is unique to the vehicle. The main switch 8 includes a communication circuit 8a that receives an ID code transmitted from the communication circuit 29a of the electronic key 29, and a decision circuit 8b that determines whether or not the ID code received by the communication circuit 8a is a genuine one that has been registered in advance. The communication circuit 8a is configured to be capable of wireless communication with the communication circuit 29a.

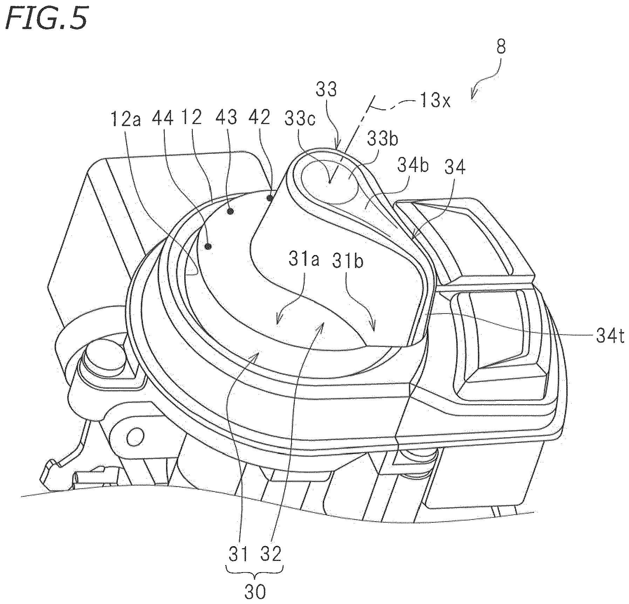

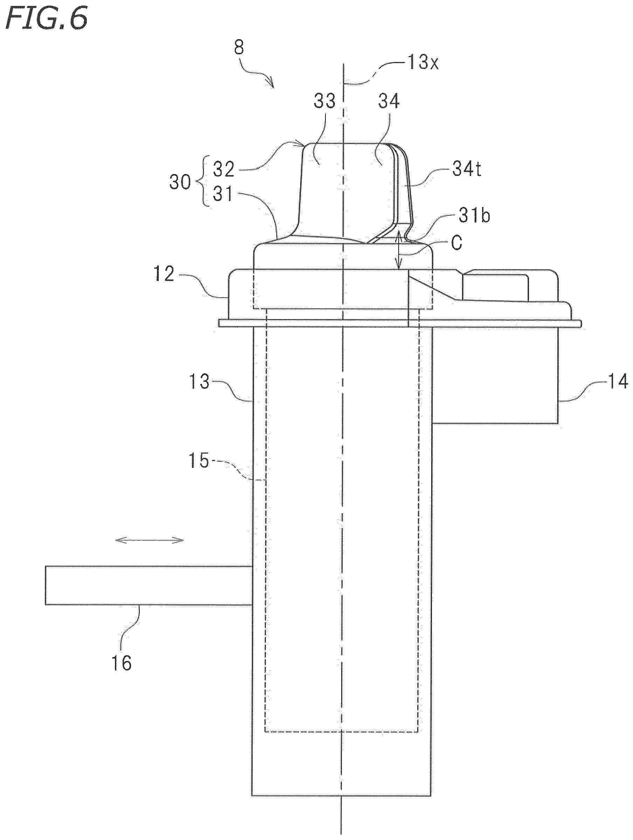

As illustrated in Figs. 4 and 5, the main switch 8 includes a fixed frame 12 having a hole 12a formed therein, and an operator 30 disposed in the hole 12a. In addition, as illustrated in Fig. 6, the main switch 8 includes a lock member 13 that supports the operator 30, a solenoid 14, and a lock bar 16.

The lock member 13 is formed in a tubular shape. The lock member 13 extends from one end (the upper end in Fig. 6) in a direction along an axis 13x (hereinafter, a direction in which the axis 13x extends is simply referred to as an "axial direction"). A rotating body 15 that is movable in an axial direction and rotatable about the axis 13x is disposed inside the lock member 13. The operating directions of the lock member 13 are set to be axial directions and circumferential directions around the axis. The operator 30 is supported on one end portion of the lock member 13 and is connected to the rotating body 15. The operator 30 is configured to be movable in an axial direction and rotatable around the axis 13x together with the rotating body 15. The operator 30 may be turned around the axis 13x and also depressed in an axial direction. Thus, the axis 13x is the operating axis of the main switch 8.

Although not shown in the drawings, the rotating body 15 is provided with a restricting member for permitting movement in axial direction but restricting rotation. The solenoid 14 is configured to drive the restricting member by being turned on/off, and to cause the restricting member to perform restriction of rotation of the rotating body 15 and cancellation of the restriction. The lock bar 16 restricts rotation of the steering handle 10. The lock bar 16 is configured to be movable in a direction perpendicular to the axis 13x. The lock bar 16 is engaged with the rotating body 15, and is configured to be movable in a direction perpendicular to the axis 13x in association with rotation of the rotating body 15. It is possible to use known components for the rotating body 15, the restricting member, the solenoid 14, and the lock bar 16. The configurations of the rotating body 15, the restricting member, and the lock bar 16 are well known, and therefore further description thereof is deemed unnecessary here.

Fig. 4 is a view illustrating the main switch 8, viewed along the axis. The top and bottom of Fig. 4 correspond respectively to the front and rear of the vehicle. The left and right of Fig. 4 correspond respectively to the left and right of the vehicle. As illustrated in Fig. 4, the operator 30 includes a main panel 31 and an operating knob 32 provided on the main panel 31. The operating knob 32 includes a shaft portion 33 disposed on the axis 13x and a lever portion 34 extending from the shaft portion 33 in a first direction (in a top-to-bottom direction in Fig. 4), which is a direction perpendicular to the axial direction. The axis 13x is in agreement with the center 33c of the shaft portion 33.

The shaft portion 33 is formed in a shaft-like shape. In other words, it is formed in a columnar shape. The shaft portion 33 extends from the main panel 31 in an axial direction. The range of the shaft portion 33 is not limited to a particular range. However, herein, the shaft portion 33 is a portion that is within the range having a predetermined distance r (which will be detailed below) from the center 33c when viewed along the axis. The predetermined distance r is a distance that is half the width dimension of the part of the shaft portion 33 that includes the axis 13x (i.e., the second direction that is perpendicular to the axial direction and the first direction, the width direction of the lever portion 34). The virtual line 33k in Fig. 4 represents the contour of the shaft portion 33. In the present preferred embodiment, the shaft portion 33 is formed in a circular shape when viewed along the axis.

The lever portion 34 extends from the shaft portion 33 in the first direction, which is perpendicular to the axial direction. In other words, the lever portion 34 extends in a radial direction. Within the operating knob 32, a distal end 34t of the lever portion 34 in the first direction is most distant from the center 33c when viewed along the axis. In other words, the lever portion 34 is a portion of the outer peripheral portion of the operating knob 32 that includes the part at which its radial dimension is the greatest. The lever portion 34 is a portion that extends further in the first direction beyond the predetermined distance r of the shaft portion 33. In the present preferred embodiment, the lever portion 34 is formed to be longer than the predetermined distance r. In the present preferred embodiment, the lever portion 34 is formed in a shape that narrows toward the distal end 34t. More specifically, the distal end 34t of the lever portion 34 is narrower than its base end. In the present preferred embodiment, the number of the lever portion 34 is 1.

The width of the shaft portion 33 is greater than the width of the lever portion 34. In other words, the dimension of a part of the shaft portion 33 that includes the axis 13x is greater than the width dimension W2 of the lever portion 34. In the present preferred embodiment, the width dimension of the lever portion 34 is the greatest W2 at its base end. The dimension W1 of the part of the shaft portion 33 that includes the axis 13x is greater in width than the dimension W2.

The operating knob 32 has a side end 36 with a phase shifted by 180 degrees relative to the lever portion 34. The center 33c of the shaft portion 33 is positioned between the distal end 34t and the side end 36. The length L1 from the distal end 34t of the lever portion 34 to the center 33c of the shaft portion 33 is longer than the length L2 from the side end 36 to the center 33c of the shaft portion 33. The distal end 34t of the lever portion 34 is more distant from the center 33c than is the outer peripheral portion of the main panel 31.

A recessed portion 33b recessed in an axial direction is formed in at least the shaft portion 33 of the operating knob 32. In the present preferred embodiment, a recessed portion 34b is formed also in the lever portion 34. The recessed portion 34b is continuous with the recessed portion 33b.

The distal end 34t of the lever portion 34 is positioned radially outward relative to the main panel 31. The length L1 from the center 33c of the shaft portion 33 to the distal end 34t of the lever portion 34 is greater than the radius of the main panel 31. The main panel 31 includes an overlapping portion 31b (see Fig. 6) overlapping with the lever portion 34 when viewed along the axis, and a non-overlapping portion 31a disposed at a position that is point-symmetrical with the overlapping portion 31b with respect to the axis 13x and not overlapping with the operating knob 32 when viewed along the axis.

The main panel 31 includes a plurality of indicators disposed around the shaft portion 33 of the operating knob 32, for indicating operations to be carried out on the motorcycle 1. What are indicated by the indicators are not limited to any particular operation. In the present preferred embodiment, the plurality of indicators may indicate Steering Lock 41, Power Off 42, Seat Open 43, and Main Power On 44. Hereinbelow, Steering Lock 41, Power Off 42, Seat Open 43, and Main Power On 44 may be referred to as indicators, as appropriate. Note that the indications of the indicators are not shown in Fig. 5.

The fixed frame 12 is fixed to the horizontal wall 6h of the leg shield 6. The operator 30 is accommodated in the hole 12a formed in the fixed frame 12. The fixed frame 12 has a pointer 39 formed at a position radially adjacent to one of the indicators 41 to 44. The pointer 39 is a part that shows which one of the indicators 41 to 44 is selected. The indicator that is adjacent to the pointer 39 along a radial direction of the main panel 31 is the selected one of the indicators. In the present preferred embodiment, the pointer 39 is formed by a groove. As described previously, the distal end 34t of the lever portion 34 is positioned outward relative to the main panel 31 in a radial direction of the main panel 31. Therefore, when viewed along the axis, the lever portion 34 has a region overlapping with the fixed frame 12. At the back of this region, clearance C is provided so that the lever portion 34 does not interfere with the fixed frame 12 when the lever portion 34 is depressed in an axial direction.

When the operating knob 32 is turned to move the indicators 41 to 44 to the position radially adjacent to the pointer 39, an operation that is associated with each of the indicators 41 to 44 can be carried out. Steering Lock 41 is associated with a steering lock operation. Hereinafter, the position at which Steering Lock 41 is radially adjacent to the pointer 39 is referred to as a steering lock position. Steering Lock 41 is an example of "stop function indicator" indicating the function that is used after the engine 19 is stopped.

Power Off 42 is associated with the operation to turn off the main power of the motorcycle 1. Hereinafter, the position at which Power Off 42 is radially adjacent to the pointer 39 is referred to as a power-off position.

Seat Open 43 is associated with the operation that causes the seat 5 in a closed state to turn into an open state. Hereinafter, the position at which Seat Open 43 is radially adjacent to the pointer 39 is referred to as a seat-open position.

Power On 44 is associated with the operation to turn on the main power of the motorcycle 1. Hereinafter, the position at which Power On 44 is radially adjacent to the pointer 39 is referred to as a power-on position. When the main power is turned on, the engine 19 can be started, for example, by depressing a starter motor switch.

An indicator region A, in which the indicators 41 to 44 are provided, extends in a circumferential direction around the shaft portion 33. The indicator region A includes the non-overlapping portion 31a.

When Power Off 42 is radially adjacent to the pointer 39, the lever portion 34 of the operating knob 32 is positioned rightward relative to the center 33c of the shaft portion 33. When Power On 44 is radially adjacent to the pointer 39, the lever portion 34 of the operating knob 32 is positioned leftward relative to the center 33c of the shaft portion 33.

The main switch 8 is disposed so that when Seat Open 43 on the operating knob 32 is radially adjacent to the pointer 39, the lever portion 34 of the operating knob 32 extends from the shaft portion 33 rearward in a vehicle fore-and-aft direction, as shown in Fig. 2.

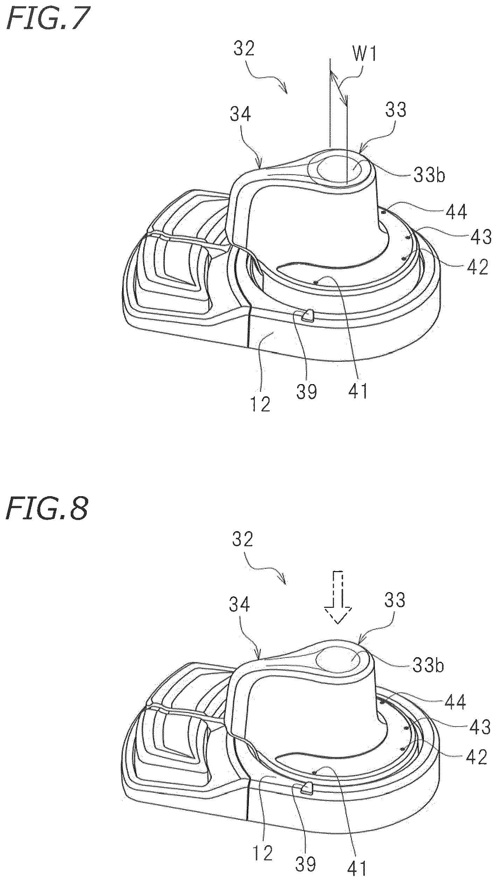

Hereinabove, the configuration of the main switch 8 has been described. In the following, a way of using the main switch 8 will be described with reference to Figs. 7 to 10. Note that in Figs. 7 to 10, the pointer 39 is described as a protrusion rather than a groove.

In the following description, a state in which steering lock is effected will be described first. As illustrated in Fig. 7, at that time, the operator 30 is at the steering lock position, at which Steering Lock 41 is radially adjacent to the pointer 39. The rider depresses the operating knob 32, as illustrated in Figs. 7 and 8. Then, the communication circuit 8a of the main switch 8 makes communication with the communication circuit 29a of the electronic key 29, which is carried by the rider. An ID code is transmitted from the communication circuit 29a of the electronic key 29, and the ID code is then received by the communication circuit 8a of the main switch 8. Then, the decision circuit 8b determines whether or not the ID code is a genuine one that has already been registered as an ID code of the motorcycle 1. If it is determined that the ID code is not a genuine one, the restricting member for restricting rotation of the rotating body 15 is not released, so that the operating knob 32 cannot be turned. On the other hand, if it is determined that the ID code is a genuine one, the restricting member is released, so that the operating knob 32 can be turned.

When the rider needs to carry out a depressing operation of the operating knob 32, the rider can intuitively understand that the shaft portion 33 should be depressed in an axial direction with a finger or palm. More specifically, the width of the shaft portion 33 that is positioned on the operating axis of the depressing operation (i.e., the axis 13x) is made larger than the width of the lever portion 34. For this reason, it is easy to induce the action of depressing the shaft portion 33 on the operating axis with a finger or palm. Moreover, because the recessed portion 33b is formed in the shaft portion 33 of the operating knob 32, the rider is easily induced, for example, to put a thumb or an index finger along the recessed portion 33b. Furthermore, the finger that is put along the recessed portion 33b does not easily slip in a radial direction. In addition, because the width dimension W1 of the central portion 33c of the shaft portion 33 is set relatively large, the shaft portion 33 is easy to be depressed with a finger or palm. Therefore, the depressing operation is easy to carry out.

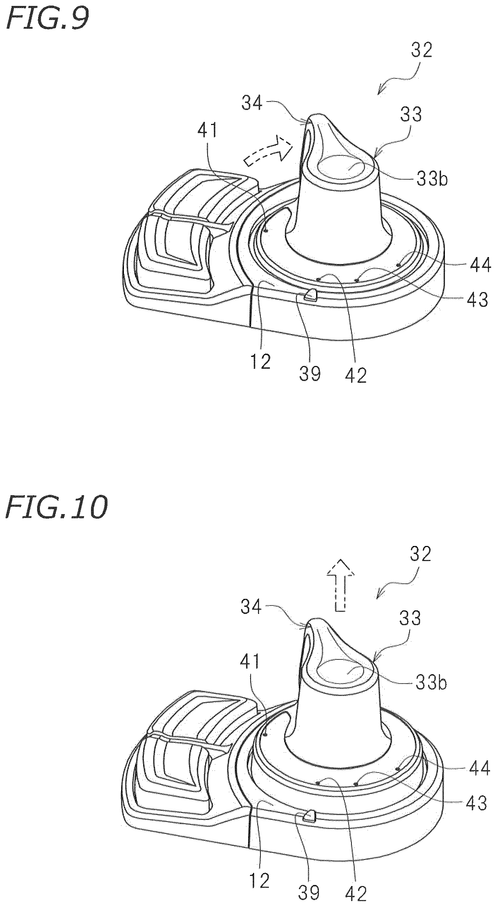

Next, while the rider keeps depressing the operating knob 32 (see the arrow in Fig. 8), the rider turns the operating knob 32 (see Fig. 9) from the steering lock position to the power-off position (the position at which Power Off 42 is radially adjacent to the pointer 39). When the rider carries out a turning operation of the operating knob 32, it is easy for the rider to catch the lever portion 34 with a finger in a circumferential direction (i.e., the direction of rotation) around the operating axis (the axis 13x), because the width of the lever portion 34 is made smaller than the width of the shaft portion 33. The rider can easily turn the operating knob 32, for example, by catching the lever portion 34 with a middle finger (with a thumb when turning it in the opposite direction) while depressing the shaft portion 33 with an index finger, or by catching the lever portion 34 with an index finger while depressing the shaft portion 33 with a thumb. Thus, it is easy to induce the action of turning the lever portion 34 with a finger. Moreover, because the width dimension W2 of the lever portion 34 is set relatively small, the user can catch and turn the distal end 34t of the lever portion 34 with a finger, so that the turning operation of the operating knob 32 is easy.

When the rider turns the operating knob 32 from the power-off position to the seat-open position (i.e., the position at which Seat Open 43 is radially adjacent to the pointer 39), the seat lock mechanism 28 is released.

When the rider turns the operating knob 32 from the seat-open position to the power-on position (i.e., the position at which Main Power On 44 is radially adjacent to the pointer 39), starting of the engine 19 is possible. The rider can start the engine 19 by, for example, depressing a starter motor switch.

Between the power-off position and the seat-open position, the operating knob 32 can be turned without depressing the operating knob 32. Likewise, between the seat-open position and the power-on position, the operating knob 32 can be turned without depressing the operating knob 32. In these cases as well, it is easy for the rider to catch the lever portion 34 with a finger in a circumferential direction (i.e., the direction of rotation) around the operating axis (the axis 13x), because the width of the lever portion 34 is made smaller than the width of the shaft portion 33. The rider can easily turn the operating knob 32, for example, by catching the lever portion 34 with a middle finger while putting an index finger along the shaft portion 33 or the fixed frame 12, or by catching the lever portion 34 with an index finger while putting a thumb along the shaft portion 33 or the fixed frame 12. As a result, it is easy to induce the action of turning the lever portion 34 with a finger.

When the rider turns the operating knob 32 from the power-on position to the power-off position under the condition in which the engine 19 is running, the engine 19 stops. Thereafter, when the rider moves the operating knob 32 from the power-off position to the seat-open position by turning the operating knob 32 as shown in Fig. 10, Fig. 9, Fig. 8, and Fig. 7 consecutively in that order while depressing the operating knob 32, the steering handle 10 is locked.

Thus, in the main switch 8 according to the present preferred embodiment, the shaft portion 33 is formed on the operating axis (i.e., the axis 13x), and the width dimension W1 of the central portion 33c of the shaft portion 33 is set larger than the width dimension W2 of the lever portion 34. In other words, the width dimension W1 of the shaft portion 33 on the operating axis is formed relatively large. With this configuration, it is easy to induce the user to carry out the operation of depressing the shaft portion 33 on the operating axis with a finger or palm, and it is easy even for a first-time user to intuitively understand the operation of depressing the operating knob 32. In addition, because the width dimension W1 is set relatively large, the shaft portion 33 is easy to be depressed with a finger or palm. Therefore, the depressing operation is easy to carry out. In addition, the main switch 8 enables the rider to easily catch the lever portion 34 with a finger in a circumferential direction (i.e., the direction of rotation) around the operating axis (the axis 13x) when the rider carries out a turning operation of the operating knob 32, because the width dimension W2 of the lever portion 34 is made smaller than the width dimension W1 of the central portion 33c of the shaft portion 33. As a result, it is easy to induce the turning operation, and it is also easy even for a first-time user to intuitively understand the turning operation of the operating knob 32. Moreover, because the width dimension W2 is set relatively small, the distal end 34t of the lever portion 34 can be caught and turned with a finger, so the turning operation of the operating knob 32 can be carried out easily. Particularly, even a rider wearing gloves can easily carry out the turning operation because the rider can carry out the turning operation without pinching the lever portion 34 but by merely catching the lever portion 34 with a finger. Thus, the present preferred embodiment can provide the main switch 8 that is easy for the user to carry out not only a turning operation but also a depressing operation and that is also easy for a user who uses it for the first time to intuitively understand how to carry out the turning operation and the depressing operation.

In the present preferred embodiment, the distal end 34t of the lever portion 34 is positioned radially outward relative to the main panel 31. Thus, the dimension from the center 33c of the shaft portion 33 to the distal end 34t of the lever portion 34 of the operating knob 32 is greater than the main panel 31. This allows the user to catch the lever portion 34 with a finger more easily and to intuitively understand that the operating knob 32 is intended to be turned. Moreover, because the axis 13x, which is the center of rotation, is separated away from the point of effort, the turning operation can be carried out more easily.

In the present preferred embodiment, the width dimension W1 of the operating knob 32 through the center 33c of the shaft portion 33 is greater than the width dimension of any other portion of the operating knob 32. This allows the user to carry out the operation of depressing the shaft portion 33 with a finger or palm more easily and also to intuitively understand the operation more easily.

In the present preferred embodiment, the recessed portions 33b and 34b, which are recessed in an axial direction, are formed respectively in an end face of the shaft portion 33 and in an end face of the lever portion 34 of the operating knob 32. Therefore, the user can easily carry out the depressing operation of the operating knob 32 by, for example, putting a thumb or a finger against the recessed portions 33b and 34b. It is easy to induce the user to carry out such a depressing operation, and it is also easy even for a first-time user to intuitively understand the depressing operation.

In the present preferred embodiment, the lever portion 34 extends from the shaft portion 33 in only one direction. The main panel 31 includes the overlapping portion 31b overlapping with the lever portion 34 of the operating knob 32, and the non-overlapping portion 31a. That is, the overlapping portion overlapping with the lever portion 34 is not formed in a portion of the main panel 31 with a phase 180 degrees shifted from the shaft portion 33 relative to the lever portion 34. Therefore, a space that is easily visible to the rider can be provided in the portion of the main panel 31 with a phase shifted by 180 degrees relative to the lever portion 34. The present preferred embodiment makes it possible to increase freedom in the layout of the indicators on the main panel 31.

Here, for example, as in the conventional technology, if the pointer is formed on the main panel and the indicators are formed in the peripheral area of the main panel, the indicators, which extend over a relatively large area, must be provided on the fixed frame. This means that a considerably large area viewed in an axial direction needs to be ensured for the fixed frame. In the present preferred embodiment, however, the pointer 39 is formed on the fixed frame 12, and the indicators 41 to 43 for indicating the operations to be carried out are provided on the main panel 31. For this reason, the area of the fixed frame 12 viewed in an axial direction can be kept small. Accordingly, when assembling the main switch 8 into the motorcycle 1, it is possible to keep the space necessary for arranging the main switch 8 small.

In the present preferred embodiment, the indicator region A that contains a plurality of indicators 41 to 44 and extends in a circumferential direction includes the non-overlapping portion 31a. As a result, it is possible to allocate the indicator region A over a sufficiently large area along the circumferential direction. As a result, the intervals between the plurality of indicators can be made wide, so the indicators are made to be easily visible. Moreover, by widening the indicator region and also making the indicators continuous, it becomes possible to make the indicators 41 to 44 easily visible.

In the present preferred embodiment, the pointer 39 is provided on the fixed frame 12. With the pointer 39, the user can easily understand the corresponding relationship between the turn positions of the operating knob 32 and the operations to be carried out, so the operation with the operating knob 32 becomes easy.

In the present preferred embodiment, the main switch 8 is disposed frontward relative to the seat 5, and the main switch 8 is disposed so that the lever portion 34 of the operating knob 32 extends from the shaft portion 33 rearward when the operating knob 32 is at a predetermined turn position. This allows the rider sitting on the seat 5 to easily operate the operating knob 32.

In the present preferred embodiment, the main switch 8 is disposed rightward relative to the vehicle's lateral center. In this case, the rider tends to operate the operating knob 32 with the right hand. When the lever portion 34 of the operating knob 32 is located rightward relative to the center 33c, the operating knob 32 is especially easy to operate. In the present preferred embodiment, when Power Off 42 is indicated, the lever portion 34 of the operating knob 32 is positioned rightward relative to the center 33c. Therefore, the turning operation for switching the operating knob 32 from the power-off position to the power-on position is easy to carry out.

In the present preferred embodiment, the main switch 8 is disposed rightward relative to the bulging portion 6A of the leg shield 6. When the operating knob 32 is at the power-off position, the operating knob 32 is at a position more distant from the bulging portion 6A. Therefore, the user can easily switch the operating knob 32 from the power-off position to the power-on position without being disturbed by the bulging portion 6A of the leg shield 6. In addition, it is possible to increase freedom in the layout of the main switch 8 because the main switch 8 does not protrude rearward in comparison with the case in which the main switch 8 is provided in the bulging portion 6A.

Although one preferred embodiment of the present invention has been described hereinabove, it should be understood that the present invention is not limited to the foregoing preferred embodiment but may be embodied in various other forms. In the following, some other preferred embodiments will be described briefly.

Although the main switch 8 is disposed rightward relative to the bulging portion 6A of the leg shield 6 in the foregoing preferred embodiment, it is also possible to dispose the main switch 8 leftward relative to the bulging portion 6A. In that case, the fixed frame 12 and the operator 30 may have a laterally symmetrical shape with the shape described in the foregoing preferred embodiment (in other words, it may have a laterally reversed arrangement).

It is also possible that the main switch 8 be disposed at a vehicle's lateral center position. It is also possible that the main switch 8 be disposed in the bulging portion 6A of the leg shield 6.

The plurality of indicators provided on the main panel 31 are not limited to Steering Lock 41, Power Off 42, Seat Open 43, and Power On 44. Moreover, their positions are not particularly limited either. In addition, the position of the pointer 39 formed on the fixed frame 12 is not limited to a particular position either.

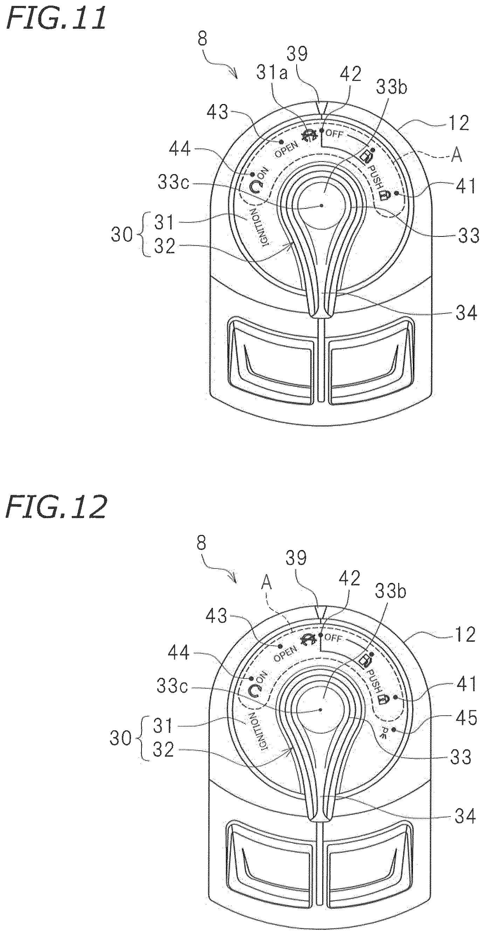

Steering Lock 41, Power Off 42, Seat Open 43, and Power On 44 may be disposed at the locations as shown in Fig. 11, for example. In this example, Power Off 42 is disposed in the non-overlapping portion 31a.

As illustrated in Fig. 12, the main panel 31 may also have a hazard lamp indicator 45 that indicates illumination of a hazard lamp. The main panel 31 may also have other indicators indicating other operations to be carried out on the motorcycle 1.

The type of indication of the indicators are not limited to any particular form. For example, the indicators may be letters, symbols, or colors.

In the foregoing preferred embodiment, the pointer 39 is formed by a groove. However, the pointer 39 is not limited to the groove, and may be in any discernible form. For example, the pointer may be a protuberance, or the pointer may be a line, a point, or the like that is colored with a different color from the surrounding region.

It is also possible that the distal end 34t of the lever portion 34 may be positioned inward relative to the main panel 31, or that it may be formed at radially the same position as the main panel 31.

In the foregoing preferred embodiment, only one lever portion 34 is provided. In place of such a configuration, it is possible to provide a plurality of lever portions 34. As already described above, the lever portion 34 is a portion of the outer peripheral portion of the operating knob 32 that includes the part at which its radial dimension is the greatest. Accordingly, when a plurality of lever portions 34 are formed, each of the lever portions 34 includes the part at which its radial dimension is the greatest (i.e., the distances from the center 33c to each of the distal ends of the lever portions 34 are equal).

Furthermore, an extension portion extending by a radial dimension that is shorter than L1 may be provided, apart from the lever portion 34. The distance from the center to the distal end of this extension portion is shorter than that of the lever portion 34.

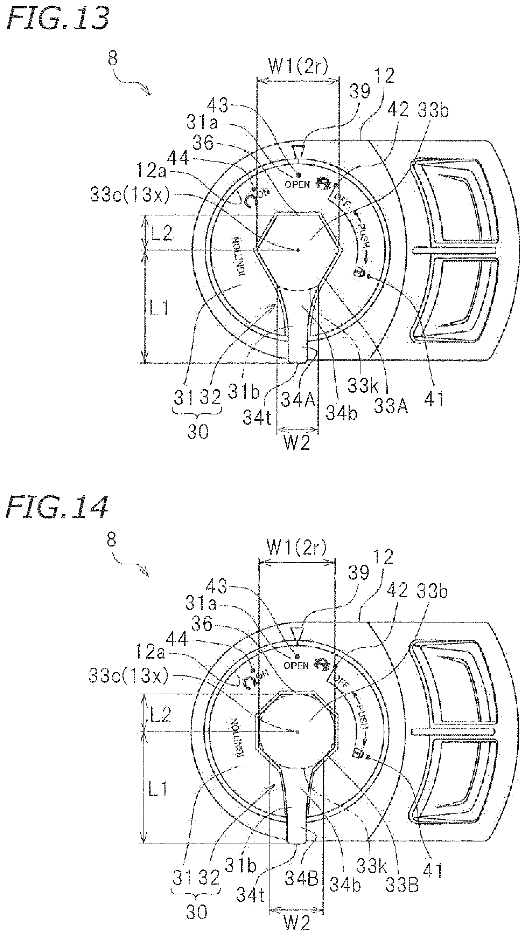

In the foregoing preferred embodiment, the shaft portion 33 is formed in a circular shape when viewed along the axis. In place of this configuration, it is also possible to employ a shaft portion 33A in a polygonal shape (for example, a hexagonal shape) as illustrated in Fig. 13. As described previously, the shaft portion is a portion that is within the range having a predetermined distance r (i.e., the distance that is half the width dimension of the part including the axis 13x of the shaft portion 33) from the center 33c, when viewed along the axis. Therefore, the virtual line 33k representing the contour of the shaft portion 33A is in a circular arc shape, and the portion extending from the virtual line 33k to the distal end 34t corresponds to a lever portion 34A.

It is also possible to employ such a configuration as a shaft portion 33B as illustrated in Fig. 14, in place of the shaft portion 33A. In this case, the portion extending from the circular virtual line 33k, which represents the range of the shaft portion 33B, to the distal end 34t corresponds to a lever portion 34B.

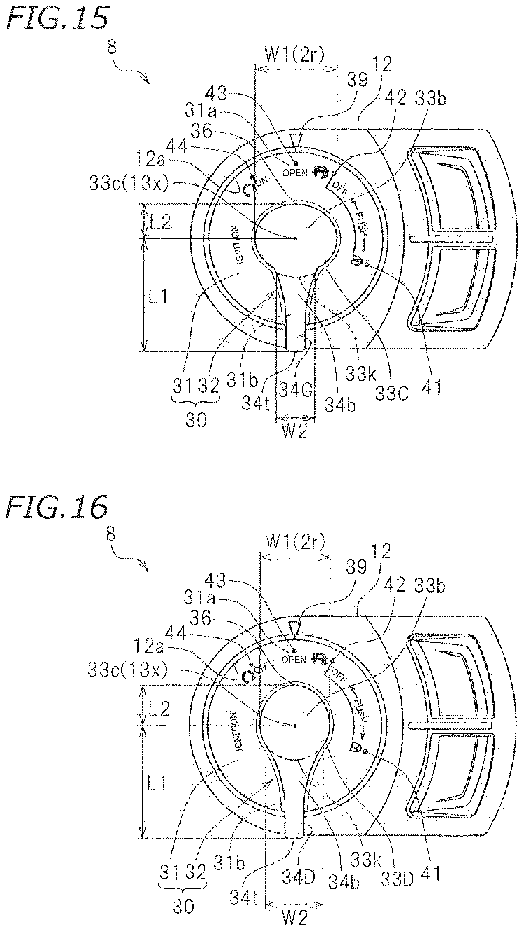

It is also possible to employ a shaft portion 33C that is in an elliptical shape as illustrated in Fig. 15 when viewed along the axis. In this case, the portion extending from the circular arc-shaped virtual line 33k, which represents the range of the shaft portion 33C, to the distal end 34t corresponds to a lever portion 34C.

It is also possible to employ a shaft portion 33D that is in an elliptical shape as illustrated in Fig. 16 when viewed along the axis. In this case, the portion extending from the circular arc-shaped virtual line 33k, which represents the range of the shaft portion 33D, to the distal end 34t corresponds to a lever portion 34D.

In the foregoing preferred embodiment, the operating knob 32 is provided with the recessed portions 33b and 34b so that a finger of the rider can be put along the operating knob 32 easily. It is also possible that only one of the recessed portions 33b and 34b may be provided, or that both of them may be eliminated.

Additionally, when the main switch 8 is provided in the vertical wall 6v, it is possible that the main switch 8 be disposed so that the lever portion 34 extends from the shaft portion 33 downward in a vehicle vertical direction when the operating knob 32 is at a predetermined turn position.

It is also possible that, in addition to Seat Open 43, an indicator that causes a lid for covering a fuel port of the fuel tank to open may be provided as an indicator in the main panel 31.

The terms and expressions which have been used herein are used as terms of description and not of limitation. There is not intention in the use of such terms and expressions of excluding any equivalents of any of the features shown or described, or portions thereof, and it is recognized that various modifications are possible within the scope of the invention claimed. The present invention may be embodied in many different forms. This disclosure should be considered as providing exemplary embodiments of the principles of the invention. These embodiments are described herein with the understanding that such embodiments are not intended to limit the invention to any specific preferred embodiments described and/or illustrated herein. The present invention is not limited to specific embodiments described herein. The present invention encompasses all the embodiments including equivalents, alterations, omissions, combinations, improvements, and/or modifications that can be recognized by those skilled in the arts based on this disclosure. Limitations in the claims should be interpreted broadly based on the language used in the claims, and such limitations should not be limited to specific embodiments described in the present description or provided during prosecution of the present application.

### REFERENCE SIGNS LIST

- 1: -- Motorcycle (vehicle)
- 8: -- Main switch
- 12: -- Fixed frame
- 13: -- Lock member
- 13x: -- Axis of lock member
- 30: -- Operator
- 31: -- Main panel
- 32: -- Operating knob
- 33: -- Shaft portion
- 33b: -- Recessed portion
- 33c: -- Center
- 34: -- Lever portion
- 36: -- Side end
- 41: -- Steering lock indicator
- 42: -- OFF indicator
- 43: -- OPEN indicator
- 44: -- ON indicator

## Claims

1. A vehicle main switch (8) comprising:
a lock member (13) having operating directions that are set to be axial directions and circumferential directions, each of the axial directions being a direction in which an axis (13x) of the lock member (13) extends and each of the circumferential directions being a direction around the axis (13x); and
an operator (30) supported on one axial end portion of the lock member (13), the operator (30) being movable in the axial directions and capable of turning in the circumferential directions, wherein:
the operator (30) comprises a main panel (31) and an operating knob (32) provided on the main panel (31);
the operating knob (32) comprises a shaft portion (33) disposed on the axis (13x) of the lock member (13) and a lever portion (34) extending from the shaft portion (33) in a first direction that is perpendicular to the axial directions;
a distal end of the lever portion (34) along the first direction is most distant, within the operating knob (32), from the axis (13x) of the lock member (13) when viewed along the axis (13x),
wherein a direction perpendicular to the axial directions and the first direction is defined as a second direction, and
wherein a dimension of a part of the shaft portion (33), that includes the axis (13x), along the second direction is greater than a dimension of the lever portion (34) along the second direction,
**characterised in that** the main panel (31) includes a plurality of indicators (41, 42, 43, 44) disposed around the shaft portion (33) of the operating knob (32), the plurality of indicators (41, 42, 43, 44) indicating operations to be carried out on the vehicle.

2. The vehicle main switch (8) according to claim 1, wherein a distal end of the lever portion (34) is positioned radially outward relative to the main panel (31).

3. The vehicle main switch (8) according to claim 1 or 2, wherein a dimension of the operating knob (32) along the second direction through the center of the shaft portion (33) is greater than a dimension of any other portion of the operating knob (32) along the second direction.

4. The vehicle main switch (8) according to any one of claims 1 through 3, wherein the operating knob (32) includes a recessed portion (33b) recessed in one of the axial directions, formed in at least an end face of the shaft portion (33).

5. The vehicle main switch (8) according to any one of claims 1 through 4, wherein:
the main panel (31) comprises:
an overlapping portion (31b) overlapping with the lever portion (34) when viewed along the axis (13x); and
a non-overlapping portion (31a) disposed at a position that is point-symmetrical with the overlapping portion (31b) with respect to the axis (13x), and not overlapping with the operating knob (32) when viewed along the axis (13x).

6. The vehicle main switch (8) according to claim 5, wherein an indicator region (A) of the main panel (31) that contains the plurality of indicators (41, 42, 43, 44) and extends in a circumferential direction includes the non-overlapping portion (31a).

7. The vehicle main switch (8) according to one of claims 1 to 6, further comprising:
a fixed frame (12) including a hole (12a) in which the operator (30) is disposed, and wherein
the fixed frame (12) includes a pointer (39) formed at a position around the hole (12a) and radially adjacent to one of the indicators (41, 42, 43, 44).

8. A vehicle (1) including a vehicle main switch (8) according to any one of claims 1 through 7.

9. A vehicle (1) comprising:
a seat (5); and
a vehicle main switch (8) according to any one of claims 1 through 7, wherein
the main switch (8) is disposed frontward relative to the seat (5), and the main switch (8) is disposed so that the lever portion (34) of the operating knob (32) extends from the shaft portion (33) downward in a vehicle vertical direction, or rearward in a vehicle fore-and-aft direction.

10. A vehicle (1) comprising:
a seat (5);
a steering handle (10); and
a vehicle main switch (8) according to any one of claims 1 through 7, wherein
the main switch (8) is disposed frontward relative to the seat (5), and the main switch (8) is disposed leftward or rightward relative to a rotation axis of the steering handle (10).

## Patentansprüche

1. Ein Fahrzeughauptschalter (8), der folgende Merkmale aufweist:
ein Verriegelungsbauglied (13), das Betätigungsrichtungen aufweist, die dahin gehend festgesetzt sind, Axialrichtungen und Umfangsrichtungen zu sein, wobei jede der Axialrichtungen eine Richtung ist, in der sich eine Achse (13x) des Verriegelungsbaugliedes (13) erstreckt, und jede der Umfangsrichtungen eine Richtung um die Achse (13x) herum ist; und
eine Betätigungseinrichtung (30), die auf einem axialen Endabschnitt des Verriegelungsbaugliedes (13) gestützt wird, wobei die Betätigungseinrichtung (30) in den Axialrichtungen bewegbar ist und sich in den Umfangsrichtungen drehen kann, wobei:
die Betätigungseinrichtung (30) eine Hauptblende (31) und einen Betätigungsknopf (32) aufweist, der auf der Hauptblende (31) bereitgestellt ist;
der Betätigungsknopf (32) einen Wellenabschnitt (33), der auf der Achse (13x) des Verriegelungsbaugliedes (13) angeordnet ist, und einen Hebelabschnitt (34) aufweist, der sich von dem Wellenabschnitt (33) in einer ersten Richtung erstreckt, die zu den Axialrichtungen senkrecht ist;
ein distales Ende des Hebelabschnittes (34) entlang der ersten Richtung innerhalb des Betätigungsknopfes (32) bei Betrachtung entlang der Achse (13x) am weitesten von der Achse (13x) des Verriegelungsbaugliedes (13) entfernt ist,
wobei eine Richtung senkrecht zu den Axialrichtungen und der ersten Richtung als eine zweite Richtung definiert ist, und
wobei eine Abmessung eines Teils des Wellenabschnittes (33), welcher die Achse (13x) umfasst, entlang der zweiten Richtung größer ist als eine Abmessung des Hebelabschnittes (34) entlang der zweiten Richtung,
**dadurch gekennzeichnet, dass** die Hauptblende (31) eine Mehrzahl von Indikatoren (41, 42, 43, 44) aufweist, die um den Wellenabschnitt (33) des Betätigungsknopfes (32) herum angeordnet sind, wobei die Mehrzahl von Indikatoren (41, 42, 43, 44) Betätigungen angeben, die auf dem Fahrzeug auszuführen sind.

2. Der Fahrzeughauptschalter (8) gemäß Anspruch 1, bei dem ein distales Ende des Hebelabschnittes (34) in Bezug auf die Hauptblende (31) radial weiter außen positioniert ist.

3. Der Fahrzeughauptschalter (8) gemäß Anspruch 1 oder 2, bei dem eine Abmessung des Betätigungsknopfes (32) entlang der zweiten Richtung durch die Mitte des Wellenabschnittes (33) größer ist als eine Abmessung anderer Abschnitte des Betätigungsknopfes (32) entlang der zweiten Richtung.

4. Der Fahrzeughauptschalter (8) gemäß einem der Ansprüche 1 bis 3, bei dem der Betätigungsknopf (32) einen in zumindest einer Endfläche des Wellenabschnittes (33) gebildeten zurückgesetzten Abschnitt (33b) umfasst, der in einer der Axialrichtungen zurückgesetzt ist.

5. Der Fahrzeughauptschalter (8) gemäß einem der Ansprüche 1 bis 4, bei dem:
die Hauptblende (31) folgende Merkmale aufweist:
einen überlappenden Abschnitt (31b), der bei Betrachtung entlang der Achse (13x) mit dem Hebelabschnitt (34) überlappt; und
einen nicht überlappenden Abschnitt (31a), der an einer Position angeordnet ist, die mit dem überlappenden Abschnitt (31b) in Bezug auf die Achse (13x) punktsymmetrisch ist und bei Betrachtung entlang der Achse (13x) nicht mit dem Betätigungsknopf (32) überlappt.

6. Der Fahrzeughauptschalter (8) gemäß Anspruch 5, bei dem ein Indikatorbereich (A) der Hauptblende (31), welcher die Mehrzahl von Indikatoren (41, 42, 43, 44) enthält und sich in einer Umfangsrichtung erstreckt, den nicht überlappenden Abschnitt (31a) umfasst.

7. Der Fahrzeughauptschalter (8) gemäß einem der Ansprüche 1 bis 6, der ferner folgende Merkmale aufweist:
einen fixierten Rahmen (12), der ein Loch (12a) umfasst, in dem die Betätigungseinrichtung (30) angeordnet ist, und wobei
der fixierte Rahmen (12) einen Zeiger (39) umfasst, der an einer Position um das Loch (12a) herum gebildet ist und zu einem der Indikatoren (41, 42, 43, 44) radial benachbart ist.

8. Ein Fahrzeug (1), das einen Fahrzeughauptschalter (8) gemäß einem der Ansprüche 1 bis 7 umfasst.

9. Ein Fahrzeug (1), das folgende Merkmale aufweist:
einen Sitz (5); und
einen Fahrzeughauptschalter (8) gemäß einem der Ansprüche 1 bis 7, wobei
der Hauptschalter (8) in Bezug auf den Sitz (5) weiter vorn angeordnet ist und der Hauptschalter (8) derart angeordnet ist, dass sich der Hebelabschnitt (34) des Betätigungsknopfes (32) von dem Wellenabschnitt (33) in einer Fahrzeugvertikalrichtung nach unten erstreckt oder in einer Fahrzeuglängsrichtung nach hinten erstreckt.

10. Ein Fahrzeug (1), das folgende Merkmale aufweist:
einen Sitz (5);
einen Lenker (10); und
einen Fahrzeughauptschalter (8) gemäß einem der Ansprüche 1 bis 7, bei dem der Hauptschalter (8) in Bezug auf den Sitz (5) weiter vorn angeordnet ist, und der Hauptschalter (8) in Bezug auf eine Drehachse des Lenkers (10) links oder rechts angeordnet ist.

## Revendications

1. Commutateur principal de véhicule (8), comprenant:
un élément de verrouillage (13) présentant des directions d'actionnement qui sont réglées de manière à être des directions axiales et des directions circonférentielles, chacune des directions axiales étant une direction dans laquelle s'étend un axe (13x) de l'élément de verrouillage (13) et chacune des directions circonférentielles étant une direction autour de l'axe (13x); et
un actionneur (30) supporté sur une partie d'extrémité axiale de l'élément de verrouillage (13), l'actionneur (30) pouvant se déplacer dans les directions axiales et étant à même de tourner dans les directions circonférentielles,
dans lequel:
l'actionneur (30) comprend un panneau principal (31) et un bouton d'actionnement (32) prévu sur le panneau principal (31);
le bouton d'actionnement (32) comprend une partie d'arbre (33) disposée sur l'axe (13x) de l'élément de verrouillage (13) et une partie de levier (34) s'étendant depuis la partie d'arbre (33) dans une première direction perpendiculaire aux directions axiales;
une extrémité distale de la partie de levier (34) dans la première direction est la plus éloignée, à l'intérieur du bouton d'actionnement (32), de l'axe (13x) de l'élément de verrouillage (13), lorsque vue le long de l'axe (13x),
dans lequel une direction perpendiculaire aux directions axiales et à la première direction est définie comme une deuxième direction, et
dans lequel une dimension d'une partie de la partie d'arbre (33), qui comporte l'axe (13x), dans la deuxième direction est supérieure à une dimension de la partie de levier (34) dans la deuxième direction,
**caractérisé par le fait que**
le panneau principal (31) comporte une pluralité d'indicateurs (41, 42, 43, 44) disposés autour de la partie d'arbre (33) du bouton d'actionnement (32), la pluralité d'indicateurs (41, 42, 43, 44) indiquant les actionnements à effectuer sur le véhicule.

2. Commutateur principal de véhicule (8) selon la revendication 1, dans lequel une extrémité distale de la partie de levier (34) est positionnée radialement vers l'extérieur par rapport au panneau principal (31).

3. Commutateur principal de véhicule (8) selon la revendication 1 ou 2, dans lequel une dimension du bouton d'actionnement (32) le long de la deuxième direction passant par le centre de la partie d'arbre (33) est supérieure à la dimension de toute autre partie du bouton d'actionnement (32) dans la deuxième direction.

4. Commutateur principal de véhicule (8) selon l'une quelconque des revendications 1 à 3, dans lequel le bouton d'actionnement (32) comporte une partie en retrait (33b) en retrait dans l'une des directions axiales, formée dans au moins une face d'extrémité de la partie d'arbre (33).

5. Commutateur principal de véhicule (8) selon l'une quelconque des revendications 1 à 4, dans lequel:
le panneau principal (31) comprend:
une partie de recouvrement (31b) venant en recouvrement avec la partie de levier (34), lorsque vue le long de l'axe (13x); et
une partie non en recouvrement (31a) disposée dans une position symétrique par rapport à la partie de recouvrement (31b) par rapport à l'axe (13x) et ne venant pas en recouvrement avec le bouton d'actionnement (32), lorsque vue le long de l'axe (13x).

6. Commutateur principal de véhicule (8) selon la revendication 5, dans lequel une région d'indication (A) du panneau principal (31) qui contient la pluralité d'indicateurs (41, 42, 43, 44) et qui s'étend dans une direction circonférentielle comporte la partie ne venant pas en recouvrement (31a).

7. Commutateur principal de véhicule (8) selon l'une des revendications 1 à 6, comprenant par ailleurs:
un cadre fixe (12) comportant un trou (12a) dans lequel est disposé l'actionneur (30), et
dans lequel
le cadre fixe (12) comporte un pointeur (39) formé à une position autour du trou (12a) et radialement adjacent à l'un des indicateurs (41, 42, 43, 44).

8. Véhicule (1) comportant un commutateur principal de véhicule (8) selon l'une quelconque des revendications 1 à 7.

9. Véhicule (1), comprenant:
un siège (5); et
un commutateur principal de véhicule (8) selon l'une quelconque des revendications 1 à 7,
dans lequel
le commutateur principal (8) est disposé vers l'avant par rapport au siège (5) et le commutateur principal (8) est disposé de sorte que la partie de levier (34) du bouton d'actionnement (32) s'étende depuis la partie d'arbre (33) vers le bas dans une direction verticale du véhicule, ou vers l'arrière dans un direction avant-arrière du véhicule.

10. Véhicule (1), comprenant:
un siège (5);
une poignée de direction (10); et
un commutateur principal de véhicule (8) selon l'une quelconque des revendications 1 à 7,
dans lequel
le commutateur principal (8) est disposé vers l'avant par rapport au siège (5), et le commutateur principal (8) est disposé vers la gauche ou la droite par rapport à un axe de rotation de la poignée de direction (10).
